# EUROPEAN PATENT APPLICATION

(11) **EP 4 822 812 A1**
(43) Date of publication of application: **14.10.2026**
(21) Application number: 25831191.9
(22) Date of filing: 18.06.2025
(51) Int. Cl.: H01M 10/42, H01M 10/052, H01M 4/62, H01M 4/36, H01M 4/133, H01M 4/134, H01M 4/131, H01M 4/02

(54) **ELECTRODE COMPRISING ELECTRODE ADDITIVE PARTICLES AND SECONDARY BATTERY COMPRISING SAME**

(30) Priority: 19.06.2024 KR 20240079511; 17.06.2025 KR 20250079756
(71) Applicant: LG Energy Solution, Ltd., Seoul 07335 (KR)
(72) Inventor: BYUN, Seoungwoo, Daejeon 34122 (KR); JANG, Eunji, Daejeon 34122 (KR); RYU, Jihoon, Daejeon 34122 (KR); KIM, Dong Kyu, Daejeon 34122 (KR); JUN, Youngjin, Daejeon 34122 (KR); LIM, Taeseob, Daejeon 34122 (KR)
(74) Representative: BCKIP Part mbB
(86) International application number: PCT/KR2025/008409
(87) International publication number: WO 2025/263979

(57) **Abstract**

A secondary battery includes a positive electrode including a positive electrode current collector and a positive electrode active material layer formed on at least one surface of the positive electrode current collector, a negative electrode including a negative electrode current collector and a negative electrode active material layer formed on at least one surface of the negative electrode current collector, and an electrolyte layer interposed between the positive electrode and the negative electrode. The positive active material layer includes positive active material particles and electrode additive particles dispersed on the positive active material layer. The negative active material layer includes negative active material particles and electrode additive particles dispersed on the negative active material layer. The electrode additive particles include fumed silica and have an average diameter of 300 nm or less.

## Description

### TECHNICAL FIELD

### CROSS-REFERENCE TO RELATED APPLICATION(S)

This application claims priority to and the benefit of Korean Patent Application No. 10-2024-0079511, filed on June 19, 2024, and Korean Patent Application No. 10-2025-0079756, filed on June 17, 2025, the disclosures of which are hereby incorporated by reference in their entirety.

### TECHNICAL FIELD

The present disclosure relates to an electrode comprising electrode additive particles and a secondary battery comprising the same.

### BACKGROUND

Recently, with the rapid spread of electronic devices using batteries such as mobile phones, notebook computers, and electric vehicles, there is a rapid increase in demand for secondary batteries that are small and light and also have relatively high capacity. In particular, lithium secondary batteries are in the spotlight as a power source for operating portable devices because they are lightweight and have high energy density. Thus, research and development efforts are being actively conducted to improve the performance of lithium secondary batteries.

Meanwhile, research to improve the rapid charge/discharge performance of secondary batteries is primarily based on i) research to enhance electrolyte ionic conductivity and ii) research to improve the film at the electrolyte/active material interface.

However, the ionic conductivity of the electrolyte and the electrolyte/active material interfacial film serves as an important factor in the actual lithium desorption/insertion process within the active material, but the concentration of free lithium ions at the interface is also an important factor during lithium ion insertion into the active material.

Therefore, there is a growing need for research that can increase the concentration of free lithium ions on the surface of electrode active materials.

### DETAILED DESCRIPTION OF THE INVENTION

### Technical Problem

Therefore, the present disclosure aims to disperse specific electrode additive particles capable of having surface charges within an electrode, thereby improving the concentration of free lithium ions at the interface during lithium ion insertion into the active material and contributing to the performance enhancement of a secondary battery applying the same.

### Technical Solution

Hereinafter, the secondary battery and the like according to specific aspects of the present disclosure will be described.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own disclosure in the best way.

The terms used herein are provided to describe exemplary aspects and are not intended to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to an aspect of the present disclosure, there is provided a secondary battery comprising: a positive electrode comprising a positive electrode current collector and a positive electrode active material layer formed on at least one surface of the positive electrode current collector; a negative electrode comprising a negative electrode current collector and a negative electrode active material layer formed on at least one surface of the negative electrode current collector; and an electrolyte layer interposed between the positive electrode and the negative electrode, wherein the positive active material layer comprises positive active material particles and electrode additive particles dispersed on the positive active material layer, and the negative active material layer comprises negative active material particles and electrode additive particles dispersed on the negative active material layer, and wherein the electrode additive particles comprise fumed silica and have an average diameter of 300 nm or less.

In the secondary battery, the electrodes, i.e., the positive and negative electrodes can achieve performance improvements similar to or greater than those in the case where oxide-based solid electrolyte particles are included, even if general ceramics having surface charges are used as electrode additive particles instead of oxide-based solid electrolyte particles containing a lithium source.

In an exemplary aspect, the electrode additive particles can increase the concentration of free lithium ions on the surfaces of the positive electrode active material layer and the negative electrode active material layer. Meanwhile, the electrode additive particles may include a solid electrolyte and/or a general ceramic. For example, the electrode additive particles may include fumed silica as a general ceramic. In particular, fumed silica is distinguished from silica fume, wherein they have the greatest difference in particle size and impurity level. Silica fume, which has a larger particle size and contains relatively more impurities, may not provide significant performance improvements due to the relative decrease in contact area and attractive forces with the electrolyte.

For example, the solid electrolyte may include one or more lithium metal oxides or lithium metal phosphates selected from Nasicon-type solid electrolyte, Lisicon-type solid electrolyte, Garnet-type solid electrolyte, Perovskite-type solid electrolyte, and LiPON-type solid electrolyte. More specific examples thereof include one or more selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LLTO (lithium lanthanum titanium oxide)-based compound, LSTP (lithium silicon titanium phosphate)-based compound, and LGPO (lithium germanium phosphate)-based compound.

In an exemplary aspect, the electrode additive particles may be included in an amount of 0.5 to 3 wt.%, based on the total weight of the positive electrode or negative electrode, respectively. If the content is less than 0.5 wt.%, the desolvation acceleration reaction by the oxide may have low contribution to improving axial force, and if the content exceeds 3 wt.%, the reaction area due to the oxide decreases, and the output performance may deteriorate due to structural changes.

Meanwhile, in an exemplary aspect, the electrode additive particles may have an average diameter of 300 nm or less. Specifically, the electrode additive particles may have an average diameter of 100 to 300 nm. As the particle size range and/or content range of the electrode additive particles are optimized, the free lithium ion concentration on the surfaces of the positive electrode active material layer and the negative electrode active material layer can be increased. On the other hand, if the particle size range of the electrode additive particles is excessively reduced to less than 100 nm, the surface of the nanoceramic particles may be covered by the polymer binder. In such a case, the performance-improving properties due to interaction between the nanoceramic and liquid electrolyte may not be realized. In particular, fumed silica powder with a size of 100 nm or less is highly prone to dust scattering, which makes it difficult to apply in actual processes. Even if fumed silica with a size of 100 nm or less is added to the electrode slurry, it cannot actually exist at a size of 100 nm or less unless further processing is performed. Such negative properties can be avoided by increasing the content of ceramics (electrode additive particles), however, increasing the ceramic content may also lead to adverse performance effects, so it is not recommended to increase the content to 3 wt.% or more. Therefore, the effects of the present disclosure can be achieved when the particle size and content of the electrode additive particles include the average diameter range of 100 to 300 nm and the content of 0.5 to 3 wt.%, respectively.

In an exemplary aspect, the electrode additive particles may have an absolute zeta potential of 25 mV or more. The strength of the electrostatic attraction is large within this range, thereby allowing an increase in the concentration of free lithium ions on the surfaces of the positive and negative electrode active material layers.

In an exemplary aspect, the negative electrode active material particles may comprise one or more materials selected from the group consisting of a carbonaceous material, a metallic compound, and a metal oxide.

In this case, the negative electrode active material used may be a compound capable of reversible intercalation and deintercalation of lithium, and specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOβ (0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Further, a metal lithium thin film may be used as the negative electrode active material. In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In an exemplary aspect, the negative electrode active material layer may further include a binder, a conductive material, and the like in addition to the above-described negative electrode active material. The binder is a component assisting in binding between the positive electrode active material and the conductive material, and in binding with the current collector. Examples of the binder may include one or more selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl(meth)acrylate, polyethyl(meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, styrene-butylene rubber, fluororubber, carboxymethylcellulose(CMC), starch, hydroxypropyl cellulose, regenerated cellulose, and mixtures thereof, but are not necessarily limited thereto.

The binder may be included in an amount of 1 to 50 parts by weight, or 3 to 15 parts by weight, based on 100 parts by weight of the total weight of the negative electrode. As a result, adhesion between the negative electrode active material and the current collector, and capacity characteristics of the secondary battery can be maintained excellently.

Further, the conductive material included in the negative electrode is not particularly limited as long as it does not cause side reactions in the internal environment of the lithium secondary battery and but has excellent electrical conductivity while not causing a chemical change in the battery. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof, but are not limited thereto.

The conductive material may be included in an amount of 0.5 to 50 parts by weight, or 1 to 30 parts by weight, based on 100 parts by weight of the total weight of the negative electrode. Thereby, electrochemical properties such as conductivity and capacity of the negative electrode and lithium secondary battery can be maintained excellently.

Additionally, a filler may be optionally added to the negative electrode as a component for inhibiting the expansion of the negative electrode. Such a filler is not particularly limited as long as it can inhibit the expansion of the electrode without causing chemical changes in the battery, and examples thereof may include olefinic polymers such as polyethylene and polypropylene; fibrous materials such as glass fibers and carbon fibers.

Further, as the negative electrode current collector, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), and their alloys, and copper (Cu) or stainless steel that is surface-treated with carbon (C), nickel (Ni), titanium (Ti) or silver (Ag) may be used, but are not necessarily limited thereto. The negative electrode current collector may have various forms such as a foil, a film, a sheet, a punched one, a porous body, a foam boy, and the like.

Meanwhile, in the lithium secondary battery of the other aspects, the above-described positive electrode can be prepared, for example, by dispersing and mixing the positive electrode active material, the binder, the conductive material and the like in a dispersion medium (solvent) to form a slurry, and coating the slurry onto a positilve electrode current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Thus, the positive electrode may include a positive electrode current collector and a positive electrode active material layer formed on at least one surface of the positive electrode current collector.

The positive electrode active material is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the positive electrode active material. LiₐA_{1-b}R_{b}D₂(wherein, 0.90 ≤ a ≤ 1.8 and 0 ≤ b ≤ 0.5); LiₐE_{1-b}R_{b}O_{2-c}D_{c}(wherein, 0.90 ≤ a ≤ 1.8, 0 ≤ b ≤ 0.5, and 0 ≤ c ≤ 0.05); LiE_{2-b}R_{b}O_{4-c}D_{c}(wherein, 0 ≤ b ≤ 0.5, 0 ≤ c ≤ 0.05); LiₐNi_{1-b-c}Co_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5 and 0.001 ≤ d ≤ 0.1.); LiₐNi_{b}Co_{c}Mn_{d}GeO₂(wherein, 0.90 ≤ a ≤ 1.8, 0 ≤ b ≤ 0.9, 0 ≤ c ≤ 0.5, 0 ≤ d ≤0.5 and 0.001 ≤ e ≤ 0.1.); LiₐNiG_{b}O₂(wherein, 0.90 ≤ a ≤ 1.8 and 0.001 ≤ b ≤ 0.1.); LiₐCoG_{b}O₂(wherein, 0.90 ≤ a ≤ 1.8 and 0.001 ≤ b ≤ 0.1.); LiₐMnG_{b}O₂(wherein, 0.90 ≤ a ≤ 1.8 and 0.001 ≤ b ≤ 0.1.); LiₐMn₂G_{b}O₄(wherein, 0.90 ≤ a ≤ 1.8 and 0.001 ≤ b ≤ 0.1.); QO₂; QS₂; LiQS₂; V₂O₅; LiV₂O₅; LiTO₂; LiNiVO₄; and Li_{(3-f)}J₂(PO₄)₃(0 ≤ f ≤ 2).

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

In addition, the positive electrode may further include a binder, a conductive material and the like in addition to the above-described positive electrode active material. The binder is a component assisting in binding between the positive electrode active material and the conductive material, and in binding with the current collector. Examples of the binder may include one or more selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl(meth)acrylate, polyethyl(meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, styrene-butylene rubber, fluororubber, carboxymethylcellulose(CMC), starch, hydroxypropyl cellulose, regenerated cellulose, and mixtures thereof, but are not necessarily limited thereto.

The binder may be included in an amount of 1 to 50 parts by weight, or 3 to 15 parts by weight, based on 100 parts by weight of the total weight of the positive electrode. As a result, adhesion between the positive electrode active material and the current collector, and capacity characteristics of the secondary battery can be maintained excellently.

Further, the conductive material included in the positive electrode is not particularly limited as long as it does not cause side reactions in the internal environment of the lithium secondary battery but has excellent electrical conductivity while not causing a chemical change in the battery. The conductive material may typically be graphite or electrically conductive carbon, and may be, for example, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof, but are not necessarily limited thereto.

The conductive material may be included in an amount of 0.5 to 50 parts by weight, or 1 to 30 parts by weight, based on 100 parts by weight of the total weight of the positive electrode. Thereby, electrochemical properties such as conductivity and capacity of the positive electrode and lithium secondary battery can be maintained excellently.

In addition, a filler may be optionally added to the positive electrode as a component for inhibiting the expansion of the positive electrode. Such a filler is not particularly limited as long as it can inhibit the expansion of the electrode without causing chemical changes in the battery, and examples thereof may include olefinic polymers such as polyethylene and polypropylene; fibrous materials such as glass fibers and carbon fibers.

Further, the positive electrode current collector may be platinum(Pt), gold(Au), palladium(Pd), iridium(Ir), silver(Ag), ruthenium(Ru), nickel(Ni), stainless steel(STS), aluminum(Al), molybdenum(Mo), chromium(Cr), carbon(C), titanium(Ti), tungsten(W), ITO(In doped SnO₂), FTO(F doped SnO₂), or an alloy thereof, or aluminum(Al) or stainless steel whose surface is treated with carbon(C), nickel(Ni), titanium(Ti) or silver(Ag), or the like, but is not necessarily limited thereto. The positive electrode current collector may be in the form of a foil, a film, a sheet, a punched form, a porous body, a foam or the like.

In an exemplary aspect, the positive electrode active material particles or the negative electrode active material particles may have an average diameter in the range of 1 to 20 um. Further, the positive electrode active material particles or the negative electrode active material particles may be included in an amount of 50 to 99 wt.% or 95 w.t% or more, based on the total weight of the positive electrode active material layer or the negative electrode active material layer, respectively.

In an exemplary aspect, all or at least a part of the outer surface of the positive electrode active material particles or the negative electrode active material particles may be covered with the electrode additive particles.

Meanwhile, the secondary battery may include an electrolyte layer interposed between the positive electrode and the negative electrode, and the liquid electrolyte included in the electrolyte layer may include a non-aqueous organic solvent and a lithium salt. The type of non-aqueous organic solvent that can be used in this case is not particularly limited, and any organic solvent that has been previously known to be applicable to electrolytes for lithium ion batteries can be used. Examples of such organic solvents include one or more selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate methyl (2,2,2-trifluoroethyl) carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Also, the ether-based solvent may include tetrahydrofuran derivatives such as dibutyl ether, tetraglyme, diglyme, dimethoxy ethane, or 2-methyl tetrahydrofuran, and the nitrile-based solvent may include succinonitrile, adiponitrile, sebaconitrile, acetonitrile, propionitrile, or the like. In addition, the sulfone-based solvent may include dimethyl sulfone, ethylmethyl sulfone, sulforane, or the like.

However, in terms of superior mechanical properties and safety, etc. of the composite electrolyte membrane, it is preferable to use, as the organic solvent, a carbonate-based solvent, a sulfone-based solvent, or a phosphate-based solvent that can be at least partially cured together with the crosslinked polymer and can exhibit flame retardant properties. Further, as the organic solvent, it is more preferable to use a solvent that exhibits low volatility under curing conditions for forming the crosslinked polymer, for example, under thermal curing conditions of 60 to 80°C.

Meanwhile, as the lithium salt dissolved or dispersed in the organic solvent, any lithium salt that has been previously known to be applicable to the electrolyte of a lithium secondary battery, for example, one or more selected from the group consisting of LiFSI(lithium bis(fluorosulfonyl)imide), LiTFSI (lithium bis(trifluoromethanesulfonyl)imide), LiCl, LiBr, LiI, LiClO₄, LiBF₄, LiPF₆, LiB₁₀Cl₁₀, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (CF₃SO₂)₃CLi, chloroborane lithium, lithium lower aliphatic carboxylate having 4 or less carbon atoms, lithium 4-phenyl borate and lithium imide may be used.

This lithium salt may be included in the organic solvent of the liquid electrolyte at a concentration of 0.8 M to 4.0 M, or 1.0 M to 2.0 M, so that the composite electrolyte membrane of one aspect can exhibit excellent thermal stability and ionic conductivity.

Meanwhile, in the lithium secondary battery of the other aspects, an electrolyte layer may be interposed between the positive electrode and the negative electrode, for example, in the form of a membrane or film with a layered structure. In this case, the composite electrolyte membrane may also serve as a separator (that is, it serves to electrically insulate the positive electrode and the negative electrode and simultaneously to allow lithium ions to pass through). At this time, the electrolyte layer may be included in the secondary battery by being coated and attached to one surface of the positive electrode and the negative electrode in the form of a thin film. Further, the electrolyte layer may be independently interposed between the positive electrode and the negative electrode. In addition, the lithium secondary battery of the other aspects may be a semi-solid battery that concurrently uses a liquid electrolyte and a solid electrolyte.

In addition, when a porous separator is added in the lithium secondary battery, olefin-based polymers such as polyethylene and polypropylene, glass fibers or the like may be used in the form of sheets, multilayers, microporous films, woven fabrics, nonwoven fabrics or the like as the separator, but are not necessarily limited thereto. However, it may be preferable to use a porous polyethylene or a porous glass fiber nonwoven fabric as the separator, and it may be more desirable to apply porous glass fiber non-woven fabric as a separator. The separator may be an insulating thin film with high ion permeability and mechanical strength, and the pore diameter of the separator may generally range from 0.01 to 10 µm, and the thickness thereof may generally range from 5 to 300 µm, but are not limited thereto.

Meanwhile, the lithium secondary battery of the other aspects may be prepared according to a conventional method in the art. For example, the lithium secondary battery can be prepared by forming a composite electrolyte membrane or the like between the positive electrode and the negative electrode, and optionally adding a porous separator or the like.

The lithium secondary battery is not only applicable to a battery cell used as a power source of a small device but also particularly suitably usable as a unit cell of a battery module which is a power source of a medium and large-sized device.

### Advantageous Effects

As described above, the secondary battery according to an aspect of the present disclosure includes fumed silica as an electrode additive particle in the positive electrode and the negative electrode, thereby increasing the concentration of free lithium ions on the surface of the electrode active material.

### BRIEF DESCRIPTION OF THE DRAWINGS

FIG. 1 shows a comparison of the charge DC resistances of the secondary batteries according to Example 1 and Comparative Examples 1-2 of the present disclosure.
FIG. 2 shows a comparison of the discharge DC resistances of the secondary batteries according to Example 1 and Comparative Examples 1-2 of the present disclosure.
FIG. 3 shows a comparison of the discharge DC resistances of the samples applying silica fume and fumed silica as electrode additive particles, respectively, in the secondary batteries according to Comparative Examples 1 and 3 of the present disclosure.

### DETAILED DESCRIPTION OF THE EMBODIMENTS

Hereinafter, the Examples of the present disclosure will be described in detail so as to be easily carried out by a person with ordinary skill in the art to which the disclosure pertains. However, the present disclosure may be realized in various different forms and is not limited to the Examples provided herein.

### Example 1: Cell applying 300 nm fumed silica positive electrode/negative electrode

NCM with an average particle size(D50) of 10 µm as the positive electrode active material and fumed silica with an average particle size(D50) of 300 nm as the electrode additive particle were mixed in a weight ratio of 99:1 to prepare a positive electrode slurry. Then, the positive electrode slurry was coated onto an aluminum current collector with a thickness of 20 µm, and then vacuum-dried at 120°C for 24 hours. Next, a rolling process was performed to form a positive electrode with a thickness of 80 µm.

A natural/artificial graphite blend with an average particle size (D50) of 10 µm as the negative electrode active material, and fumed silica with an average particle size (D50) of 300 nm as the electrode additive particles were mixed in a weight ratio of 99:1 to prepare a negative electrode slurry. Then, the negative electrode slurry was coated onto a copper current collector with a thickness of 20 µm, and then vacuum-dried at 120°C for 24 hours. Next, a rolling process was performed to form a negative electrode with a thickness of 80 µm.

The prepared positive and negative electrodes were arranged to face each other, a polyethylene (PE) separator with a thickness of 15 µm was interposed therebetween, and charged with an electrolyte to produce a bi-cell type lithium secondary battery.

In this case, 1.0M LiFSI was dissolved in an organic solvent consisting of ethylene carbonate/ethyl methyl carbonate (EC/EMC volume ratio: 3/7) to prepare the electrolyte.

### Comparative Example 1: Cell applying 300 nm fumed silica positive electrode

A positive electrode was prepared in the same manner as in Example 1.

In order to prepare the negative electrode, a natural/artificial graphite blend with an average particle size (D50) of 10 µm was used as the negative electrode active material, and the negative electrode active material, conductive material, and binder were mixed in a weight ratio of 96.5:1.5:2, and the process was performed in the same manner as in the positive electrode to prepare a negative electrode.

The prepared positive and negative electrodes were arranged to face each other, a polyethylene (PE) separator with a thickness of 15 µm was interposed therebetween, and charged with an electrolyte to produce a bi-cell lithium secondary battery. In this case, 1.0M LiFSI was dissolved in an organic solvent consisting of ethylene carbonate/ethyl methyl carbonate (EC/EMC volume ratio: 3/7) to prepare the electrolyte.

### Comparative Example 2: Cell not applying electrode additive particles

A cell not applying electrode additive particles ("bare") was produced in the same manner as in Comparative Example 1, except that electrode additive particles were not used in the positive electrode slurry.

### Experimental Example 1: Charge DC Resistance

The cells produced in Example 1 and Comparative Examples 1-2 were repeatedly subjected to charge-discharge tests at room temperature (about 25°C) under the following conditions: 1) 0.2C - 0.33C charging (cut-off: 4.2 V, 0.05 C), and 2) 0.2C - 0.33C (cut-off: 2.5 V), and the resistance was measured for each state of charge (SOC). Specifically, the charge-discharge tests were repeatedly performed under SOC setting of 10% to 90%, and the DC resistance was measured after each charge-discharge cycle (cut-off: 10s or 4.5V).

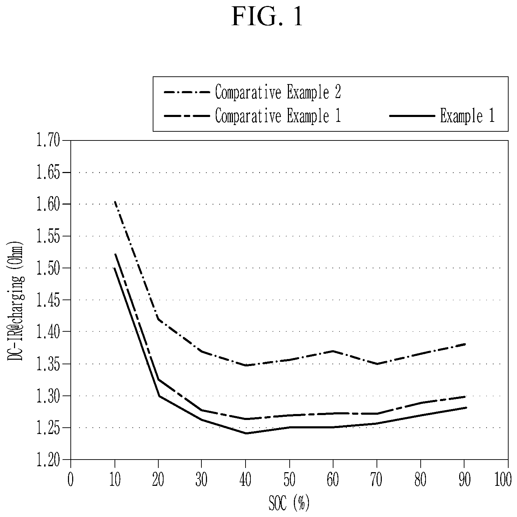

FIG. 1 shows a comparison of the charge DC resistances of the secondary batteries according to Example 1 and Comparative Examples 1-2 of the present disclosure. Referring to FIG. 1, the charge DC resistance versus the state of charge of the cells can be confirmed. In particular, it can be confirmed that Example 1, in which fumed silica was applied to both the positive and negative electrodes, exhibited superior charge DC resistance characteristics as compared to Comparative Example 1, in which fumed silica was applied only to the positive electrode.

### Experimental Example 2: Measurement of Discharge DC Resistance

The cells produced in Example 1 and Comparative Examples 1-2 were repeatedly subjected to charge-discharge tests at room temperature (about 25°C) under the following conditions: 1) 0.2C - 0.33C charging (cut-off: 4.2 V, 0.05 C), and 2) 0.2C - 0.33C (cut-off: 2.5 V), and the resistance was measured for each state of charge(SOC). Specifically, the charge-discharge tests were repeatedly performed under SOC setting of 10% to 90%, and the DC resistance was measured after each charge-discharge cycle (cut-off: 10s or 2V).

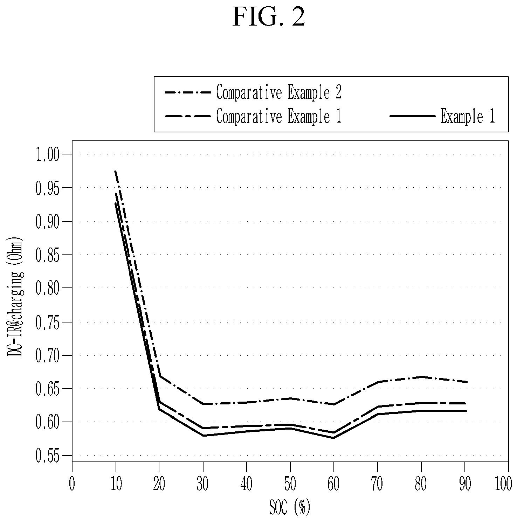

FIG. 2 shows a comparison of the discharge DC resistances of the secondary batteries according to Example 1 and Comparative Examples 1-2 of the present disclosure. Referring to FIG. 2, the discharge DC resistance versus the state of charge of the cells can be confirmed. In particular, it can be confirmed that Example 1, in which fumed silica was applied to both the positive and negative electrodes, exhibited superior charge DC resistance characteristics as compared to Comparative Example 1, in which fumed silica was applied only to the positive electrode.

### Comparative Example 3: Cell applying silica fumed positive electrode

A cell applying a silica fumed positive electrode ('Silica fumed') was produced in the same manner as in Comparative Example 1, except that silica fume with an average particle size (D50) of 800 nm was used as the electrode additive particles.

### Experimental Example 3: Comparison of discharge DC resistance- silica fume

Comparative Examples 1 and 3 were applied, and the discharge DC resistance was measured in the same manner as in Experimental Example 2 to confirm the performance differences depending on the application of fumed silica and silica fume.

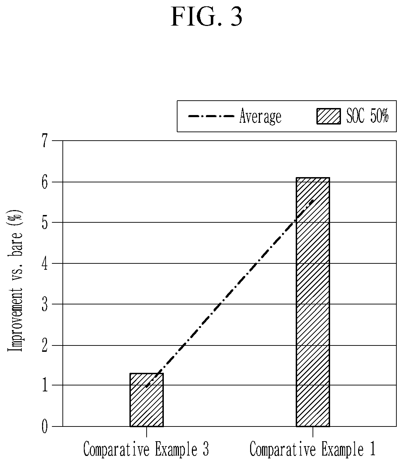

FIG. 3 shows a comparison of the discharge DC resistances of the samples applying silica fume and fumed silica as electrode additive particles, respectively, in the secondary batteries according to Comparative Examples 1 and 3 of the present disclosure. The biggest difference between fumed silica and silica fume is the particle size and the impurity level. Referring to FIG. 3, it was confirmed that silica fume, which has a large particle size and contains relatively more impurities, does not significantly improve performance due to a decrease in contact area and attractive force with the electrolyte.

Although preferred aspects of the present disclosure have been shown and described above, the scope of the present disclosure is not limited thereto, and numerous other variations and modifications can be made to the aspects by those skilled in the art using the basic principles of the disclosure defined in the appended claims, which also falls within the spirit and scope of the disclosure.

## Claims

1. A secondary battery, comprising:
a positive electrode comprising a positive electrode current collector and a positive electrode active material layer formed on at least one surface of the positive electrode current collector;
a negative electrode comprising a negative electrode current collector and a negative electrode active material layer formed on at least one surface of the negative electrode current collector; and
an electrolyte layer interposed between the positive electrode and the negative electrode,
wherein the positive active material layer comprises positive active material particles and electrode additive particles dispersed on the positive active material layer, and the negative active material layer comprises negative active material particles and electrode additive particles dispersed on the negative active material layer, and
wherein the electrode additive particles comprise fumed silica and have an average diameter of 300 nm or less.

2. The secondary battery according to claim 1,
wherein the electrode additive particles increase a concentration of free lithium ions on a surface of the positive electrode active material layer and the negative electrode active material layer.

3. The secondary battery according to claim 1,
wherein the electrode additive particles are included in an amount ranging from 0.5 to 3 wt.% based on a total weight of the positive electrode or the negative electrode, respectively.

4. The secondary battery according to claim 1,
wherein the electrode additive particles have an average diameter ranging from 100 nm to 300 nm.

5. The secondary battery according to claim 1,
wherein the positive electrode active material particles or the negative electrode active material particles have an average diameter ranging from 1 µm to 20 µm.

6. The secondary battery according to claim 1,
wherein the electrode additive particles have an absolute zeta potential of 25 mV or more.

7. The secondary battery according to claim 1,
wherein the negative electrode active material particles comprise one or more of a carbonaceous material, a metallic compound, or a metal oxide.

8. The secondary battery according to claim 1,
wherein all or at least a part of an outer surface of the positive electrode active material particles or the negative electrode active material particles is covered with the electrode additive particles.
